# EUROPEAN PATENT APPLICATION

(11) **EP 3 073 150 A1**
(43) Date of publication of application: **28.09.2016**
(21) Application number: 14864005.5
(22) Date of filing: 20.11.2014
(51) Int. Cl.: F16H 9/18

(54) **V-BELT CONTINUOUSLY VARIABLE TRANSMISSION**

(30) Priority: 22.11.2013 JP 2013241682
(71) Applicant: NTN Corporation, Osaka-shi, Osaka 550-0003 (JP)
(72) Inventor: ITAGAKI, Taku, Iwata-shi Shizuoka 438-0037 (JP); RYOUNO, Yoshiaki, Iwata-shi Shizuoka 438-0037 (JP); AKAISHI, Kazuya, Iwata-shi Shizuoka 438-0037 (JP)
(74) Representative: Grünecker Patent- und Rechtsanwälte PartG mbB
(86) International application number: PCT/JP2014/080766
(87) International publication number: WO 2015/076333

(57) **Abstract**

A V-belt type infinitely variable transmission is provided which is made up of a smaller number of parts and which can be easily assembled and disassembled. By rotating an eccentric cam (84), an arm member (60) is moved in the axial direction of a primary shaft (16). When the arm member (60) is moved in this direction, a movable pulley member (32) of a driving pulley (30) is moved relative to a fixed pulley member (31) of the driving pulley (30). Thus, it is possible to adjust the groove width of the driving pulley (30).

## Description

### TECHNICAL FIELD

This invention relates to a V-belt type infinitely variable transmission including a driving pulley and a driven pulley in which the driven pulley is rotated at varying speeds by changing the diameters of the portions of the V-belt wound on the driving pulley and the driven pulley, respectively.

### BACKGROUND ART

Known V-belt type infinitely variable transmissions used in vehicles such as motorcycles are disclosed e.g. in the below-identified Patent documents 1 and 2. The V-belt type infinitely variable transmission disclosed in Patent document 1 includes a V-belt trained around a driving pulley and a driven pulley, and an actuator capable of changing the groove width of the driving pulley by axially sliding a movable pulley member of the driving pulley, thereby changing the diameter of the portion of the V-belt wound on the driving pulley. With the change in this diameter, the tension of the V-belt changes, which changes the groove width of the driven pulley, so that it is possible to increase or reduce the rotational speed of the driven pulley.

The actuator includes an electric motor, and a ball-screw mechanism driven by the electric motor. When the nut of the ball-screw mechanism is rotated and moved in the axial direction of the threaded shaft of the ball-screw mechanism, which is in threaded engagement with the nut through balls, by the electric motor, a fork member is pivoted such that the movable pulley member is moved axially.

In this case, if the threaded shaft is rotated when the nut is rotated, it is impossible to move the threaded shaft in the axial direction. Thus, it is necessary to rotationally fix the threaded shaft.

On the other hand, with the V-belt type infinitely variable transmission disclosed in Patent document 2, an arm member is coupled to the movable pulley member of the driving pulley supported by the drive shaft so as to be rotatable but not axially movable relative to the movable pulley member. Thus, by moving the arm member in the axial direction of the driving shaft with an actuator unit as an arm driving device, the movable pulley member is moved in the axial direction of the driving shaft together with the arm member, whereby the groove width of the driving pulley is adjusted.

The actuator unit includes an electric motor, and a gear reduction mechanism for reducing the rotation of the electric motor. A threaded shaft is connected to an output gear of the gear reduction mechanism, and is in threaded engagement with an internal thread formed on the inner periphery of a cylindrical portion provided at an end of the output shaft, whereby the output shaft is moved in the axial direction by rotating the threaded shaft, thereby moving the arm member in the axial direction together with the output shaft.

### PRIOR ART DOCUMENTS

### PATENT DOCUMENTS

Patent document 1: JP Patent Publication 2009-79759A
Patent document 2: JP Patent Publication 2011-33067A

### SUMMARY OF THE INVENTION

### OBJECT OF THE INVENTION

With the V-belt type infinitely variable transmission disclosed in Patent document 1, since a presser member in the shape of a doughnut plate is press-fitted to an end of the threaded shaft, and the threaded shaft is moved in the axial direction by pressing the pressing member with the end of the fork member, an anti-rotation mechanism is additionally necessary to prevent rotation of the threaded shaft of the ball-screw mechanism. This complicates the structure, and increases the size, of the entire device, and also increases the number of component parts, which in turn makes assembly troublesome.

In contrast, with the V-belt type infinitely variable transmission disclosed in Patent document 2, since the arm member is moved by moving the output shaft of the actuator unit in the axial direction, thereby moving the movable pulley member in the axial direction of the driving shaft, the number of parts is small, so that the transmission is simple in structure and small in size. However, since the output shaft is coupled to the arm member by bringing a hook provided at an end of the output shaft into engagement with a pin provided on the arm member, the hook has to be engaged and disengaged when assembling the V-belt type infinitely variable transmission and disassembling it for replacement of parts. This makes it troublesome to assemble and disassemble the transmission.

An object of the present invention is to provide a V-belt type infinitely variable transmission which is made up of a smaller number of parts and which can be easily assembled and disassembled.

### MEANS FOR ACHIEVING THE OBJECT

In order to achieve this object, the present invention provides a V-belt type infinitely variable transmission comprising:
a driving pulley supported by a driving shaft;
a driven pulley supported by a driven shaft;
a V-belt trained around the driving pulley and the driven pulley;
a sliding guide mechanism by means of which a movable pulley member of one of the driving pulley and the driven pulley is supported by the one of the driving shaft and the driven shaft supporting the movable pulley member so as to be rotationally fixed, and axially slidable, relative to the movable pulley member;
an arm member capable of moving in an axial direction of the movable pulley member, thereby moving the movable pulley member in the axial direction together with the arm member such that a groove width of said one of the driving pulley and the driven pulley changes; and
an arm driving device configured to move the arm member in the axial direction,
wherein the arm driving device comprises:
an eccentric cam kept in contact with the arm member and capable of moving the arm member in the axial direction when the eccentric cam is rotated; and
a rotationally driving device configured to rotate the eccentric cam.

By moving the arm member in the axial direction of the driving shaft by rotating the eccentric cam, it is not necessary to couple the arm driving device to the arm member. This makes it easier to assemble and disassemble the transmission.

By providing the arm member with a roller which is rotatable and kept in contact with the eccentric cam, at a portion of the arm member opposed to the eccentric cam, it becomes unnecessary to couple the arm driving device to the arm member, thus making it easier to assemble and disassemble the transmission.

The sliding guide mechanism for axially slidably supporting the movable pulley member may include an annular sliding guide member fixedly fitted to the shaft supporting the movable pulley member, and a plurality of guide pins embedded in the sliding guide member and each slidably inserted in each of axial guide recesses formed in a boss portion of the movable pulley member and equal in number to the guide pins, to slidably support the movable pulley member. With this arrangement, compared to the arrangement in which the movable pulley member is supported by fitting splines, the slide resistance of the movable pulley member decreases significantly. This reduces the load on the rotationally driving device, and thus makes it possible to use an electric motor that is small in capacity and size as an electric motor constituting the rotationally driving device.

### ADVANTAGES OF THE INVENTION

According to the present invention, since the groove width of the pulley is adjusted by rotating the eccentric cam and moving the arm member rotatably coupled to the movable pulley member in the axial direction of the driving shaft, it is not necessary to couple the arm member to the arm driving device, which makes it easier to assemble and disassemble the transmission.

### BRIEF DESCRIPTION OF THE DRAWINGS

Fig. 1 is a vertical sectional view of a V-belt type infinitely variable transmission embodying the present invention.
Fig. 2 is an enlarged sectional view of and around a driving pulley and an arm driving device shown in Fig. 1.
Fig. 3 is an enlarged sectional view of and around a driven pulley of Fig. 1.
Fig. 4(a) is a sectional view taken along line IV-IV of Fig. 2; and Fig. 4(b) is a sectional view of and around the driving pulley, showing the state in which the groove width of the driving pulley has been reduced.

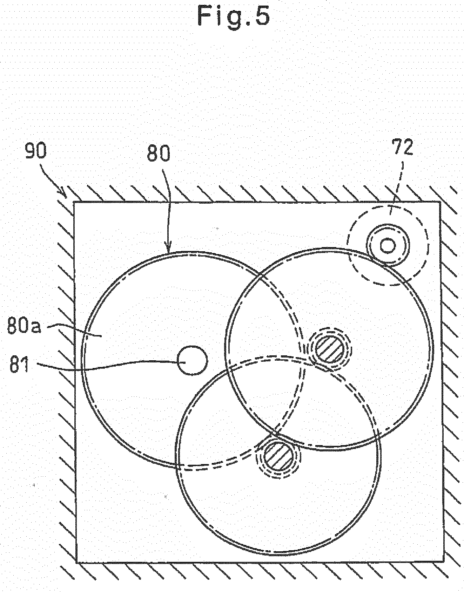

Fig. 5 is a sectional view taken along line V-V of Fig. 2.
Fig. 6 is a cross-sectional view of Fig. 4(b).

### BEST MODE FOR EMBODYING THE INVENTION

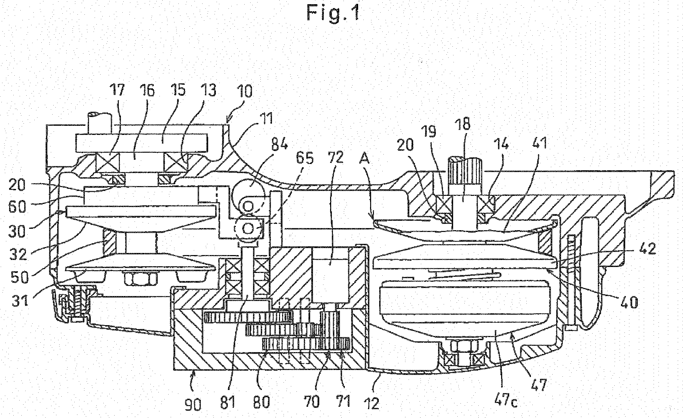

The embodiment of the present invention is now described with reference to the drawings. As shown in Fig. 1, the V-belt type infinitely variable transmission according to the present invention includes a transmission case 10.

The transmission case 10 comprises a case body 11, and a cover 12 screwed to the case body 11. The case body 11 also serves as an engine cover, and is formed with shaft inserting holes 13 and 14 at one and the other ends thereof, respectively.

A crankshaft 16 provided on a crank disk 15 of the engine is inserted in the shaft inserting hole 13, i.e. the hole formed at the one end of the case body 11. The crankshaft 16 is a primary shaft as a driving shaft, and is rotatably supported by a bearing 17 mounted in the shaft inserting hole 13.

A secondary shaft 18 as a driven shaft is inserted through the shaft inserting hole 14, i.e. the hole formed at the other end of the case body 11, and protrudes into the transmission case 10. The secondary shaft 18 is rotatably supported by a bearing 19 mounted in the shaft inserting hole 14.

The shaft inserting holes 13 and 14 are sealed by seal members 20 mounted in the holes 13 and 14, respectively.

A V-belt type infinitely variable transmission mechanism A is mounted in the transmission case 10. The V-belt type infinitely variable transmission mechanism A includes a driving pulley 30 supported by the primary shaft 16, a driven pulley 40 supported by the secondary shaft 18, and a V-belt 50 trained around the pulleys 30 and 40.

The V-belt type infinitely variable transmission mechanism A further includes an arm member 60 capable of adjusting the groove width of the driving pulley 30, and an arm driving device 70 for actuating the arm member 60.

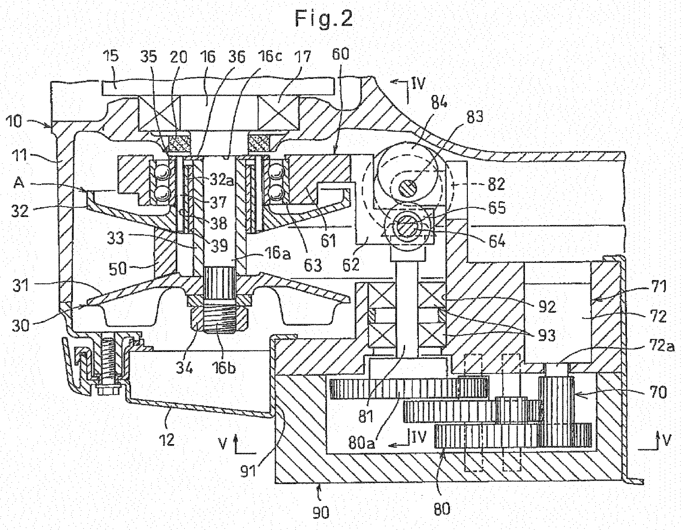

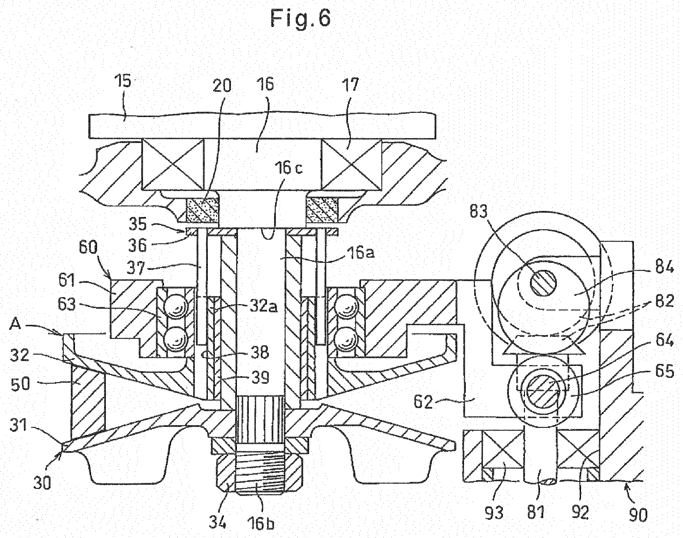

As shown in Figs. 2 and 6, the driving pulley 30 comprises a dish-shaped fixed pulley member 31 and a dish-shaped movable pulley member 32. The fixed pulley member 31 is fitted on a small-diameter shaft portion 16a of the primary shaft 16 by means of splines so as to rotate together with the primary shaft 16, and sandwiched between a sleeve 33 fitted on the small-diameter shaft portion 16a and a nut 34 in threaded engagement with an external thread 16b formed on the outer periphery of the small-diameter shaft portion 16a at its end, so as to be axially immovably fixed in position.

The movable pulley member 32 is fitted on the sleeve 33, with a slide bearing 39 mounted between the fitting portions of the movable pulley member 32 and the sleeve 33. The movable pulley member 32 is rotationally fixed, and axially slidably supported, relative to the primary shaft 16 by means of a sliding guide mechanism 35 provided between the movable pulley member 32 and the primary shaft 16.

The sliding guide mechanism 35 includes an annular sliding guide member 36 fitted on the small-diameter shaft portion 16a at its root so as to be fixedly and axially sandwiched between a step 16c provided at the root of the small-diameter shaft portion 16a and the sleeve 33. The sliding guide member 36 has a plurality of guide pins 37 embedded in one surface of the sliding guide member 36 each inserted and slidably supported in one of axial guide recesses 38 formed in a boss portion 32a of the movable pulley member 32 and equal in number to the guide pins 37, such that the torque of the primary shaft 16 is transmitted to the movable pulley member 32 through the guide pins 37.

The plurality of guide pins 37 are arranged at predetermined intervals on a common circle having its center located on the axis of the sliding guide member 36. In the embodiment shown, the guide recesses 38, into which the guide pins 37 are inserted, are axial grooves having widths substantially equal to the diameters of the guide pins 37. However, the guide recesses 38 may be pin holes having diameters substantially equal to the diameters of the guide pins 37.

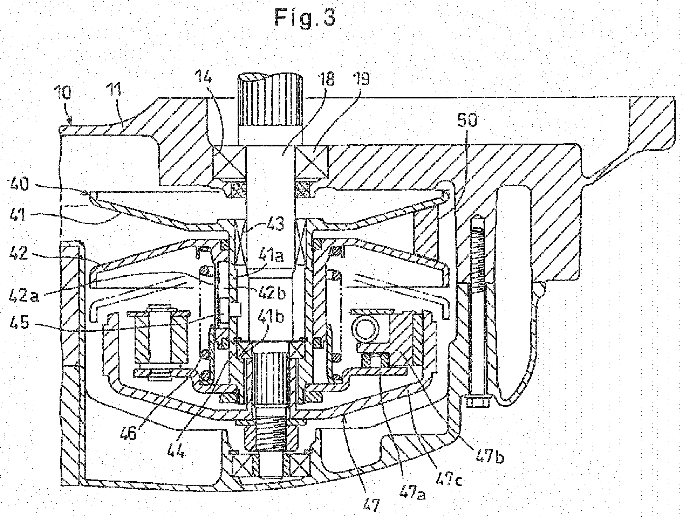

As shown in Fig. 3, the driven pulley 40 comprises, as with the driving pulley 30, a dish-shaped fixed pulley member 41 and a dish-shaped movable pulley member 42. The fixed pulley member 41 includes a boss portion 41a fitted on the secondary shaft 18 and rotatably supported by a pair of bearings 43 and 44. Of the pair of bearings 43 and 44, the bearing 44, which is located at the end of the secondary shaft 18, is supported so as to be axially immovable. The boss portion 41a has a step 41b formed on the inner periphery thereof and kept in engagement with the bearing 44, whereby the fixed pulley member 41 is axially immovably supported.

The movable pulley member 42 includes a tubular portion 42a fitted on the boss portion 41a of the fixed pulley member 41, and formed with an axially extending slit 42b. The boss portion 41a of the fixed pulley member 41 has a key member 45 mounted thereto which is inserted in the slit 42b, whereby the movable pulley member 42 is axially slidable. The movable pulley member 42 is further biased toward the fixed pulley member 41 by an elastic member 46 comprising a coil spring. The movable pulley member 42 is rotationally fixed to the boss portion 41a, namely, rotatable together with the boss portion 41a, due to the engagement of the key member 45 in the slit 42b.

A centrifugal clutch 47 is mounted between the boss portion 41a of the fixed pulley member 41 and the secondary shaft 18. The centrifugal clutch 47 includes a weight arm 47a fixedly fitted on the boss portion 41a so as to rotate together with the boss portion 41a, and weights 47b fitted on the weight arm 47a so as to be pivotable about axes extending parallel to the secondary shaft 18, and a cup-shaped outer clutch member 47c surrounding the weights 47b and fixedly fitted on the secondary shaft 18.

The centrifugal clutch 47 is configured such that when the rotational speed of the driven pulley 40, which rotates as the V-belt 50 moves, increases and reaches a predetermined speed, the weights 47b are pivoted radially outwardly until the weights 47b are pressed against, and engage, the radially inner surface of the outer clutch member 47c, whereby the rotation of the driven pulley 40 is transmitted to the secondary shaft 18.

As shown in Figs. 2 and 6, the arm member 60 includes a ring portion 61, and bifurcated pieces 62 provided on the outer periphery of the ring portion 61. The ring portion 61 is supported by the movable pulley member 32 through a release bearing 63 fitted on the boss portion 32a of the movable pulley member 32 such that the ring portion 61 is rotatable relative to the movable pulley member 32 but is axially immovable relative to the movable pulley member 32, i.e. moved together with the movable pulley member 32.

The arm member 60 is configured to axially move the movable pulley member 42 in the axial direction of the primary shaft 16 under the axial pressing force applied to the bifurcated pieces 62. When the axial pressing force is applied to the bifurcated pieces 62, the ring portion 61 is subjected to a moment load that tends to tilt the ring portion 61. In order to stably support such moment load, a double-row angular ball bearing is used as the release bearing 63 in the embodiment. However, instead of a double-row angular ball bearing, a deep groove ball bearing, or more preferably, two or more deep groove ball bearings may be used.

The bifurcated pieces 62 have the shape of the letter L in plan view, and are vertically opposed to each other. The bifurcated pieces 62 support, at their distal ends which are located inside of the V-belt 50, the respective ends of a roller shaft 64 on which a roller 65 is rotatably supported. The roller 65 is a rolling bearing.

The roller 65 is rotatably mounted between the bifurcated pieces 62 of the arm member 60. As shown in Fig. 2, the arm driving device 70 includes an eccentric cam 84 which rotates relative to the roller 65 while being kept in contact with the roller 65, and a rotationally driving unit 71 for rotationally driving the eccentric cam 84.

The arm driving device 70 further includes a unit case 90 in which is mounted the rotationally driving unit 71 and which is fitted in a fitting recess 91 formed in the cover 12 of the transmission case 10.

The rotationally driving unit 71 includes an electric motor 72, and a speed reduction mechanism 80 for reducing the speed of, and transmitting, the rotation of a rotor shaft 72a of the electric motor 72.

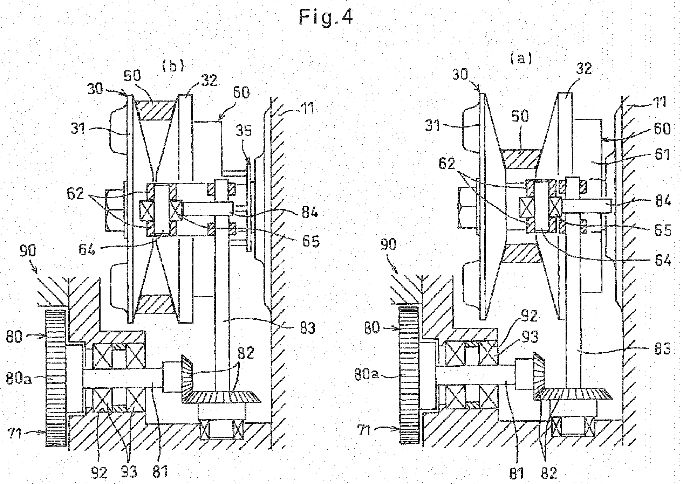

The speed reduction mechanism 80 is a spur gear type speed reducer comprising multiple stages of spur gears. An output gear 80a in the final stage of the spur gear type speed reducer 80 includes an output shaft 81 which extends parallel to the primary shaft 16 and through a bearing fitting hole 92 formed in the unit case 90, with its end protruding into the cover 12 of the transmission case 10, and is rotatably supported by bearings 93 mounted in the bearing fitting hole 92. The rotation of the output shaft 81 is transmitted to the cam shaft 83 through a pair of bevel gears 82 shown in Fig. 4(a), which meshes with each other.

The cam shaft 83 extends vertically and intersects with the output shaft 81 at a right angle, with its top end portion opposed, in the fore-and-aft direction, to the roller 65, which is rotatable between the bifurcated pieces 62 of the arm member 60. The eccentric cam 84 is provided at this top end portion of the cam shaft 83.

In Fig. 2, while the speed reduction mechanism 80 is a spur gear type speed reducer comprising multiple stages of spur gears, it may be a planetary gear type speed reducer or a gear type speed reducer comprising a worm and a worm wheel. If a gear type speed reducer comprising a worm and a worm wheel is used, the worm wheel is fixed to the bottom end portion of the cam shaft 83, shown in Fig. 4(a), and the worm is arranged so as to mesh with the worm wheel and be directly driven by an electric motor. With this arrangement, it is possible to omit the bevel gears 82, shown in Fig. 4(a), and thus simplify the structure.

The V-belt type infinitely variable transmission of the embodiment includes a controller, not shown, for controlling the electric motor 72 of the arm driving device 70. When the primary shaft 16 is rotated, and the driving pulley 30 is rotated together with the primary shaft 16, its rotation is transmitted to the driven pulley 40 through the V-belt 50, so that the driven pulley 40 is rotated in the same direction as the driving pulley 30. This causes the centrifugal clutch 47 to engage, so that the rotation of the driven pulley 40 is transmitted to the secondary shaft 18.

With torque being transmitted from the primary shaft 16 to the secondary shaft 18, when the electric motor 72 is rotated, its rotation is reduced in speed in the spur gear type speed reducer 80 and output from the output shaft 81. The rotation of the output shaft 81 is transmitted to the cam shaft 83 through the pair of bevel gears 82, which mesh with each other, so that the eccentric cam 84 is rotated together with the cam shaft 83..

Figs. 2 and 4(a) show the state in which the eccentric cam 84 is in contact with the roller 65 at a portion of its outer periphery that is the smallest in eccentricity. When the eccentric cam 84 rotates in this state, the roller 65 is pressed by the eccentric cam 84, so that the arm member 60 is moved in the axial direction of the primary shaft 16 under the pressing force applied to the roller 65. Since the movable pulley member 32 of the driving pulley 30 is coupled to the arm member 60, when the arm member 60 is moved in the above direction, the movable pulley member 32 is moved toward the fixed pulley member 31, so that the groove width of the driving pulley 30 decreases, which in turn increases the diameter of the portion of the V-belt 50 wound on the driving pulley 30.

With an increase in diameter of the portion of the V-belt wound on the driving pulley 30, the tension of the V-belt 50 increases, so that the movable pulley member 42 of the driven pulley 40 slides away from the fixed pulley member 41 of the driven pulley 40, thus increasing the groove width of the driven pulley 40, and reducing the diameter of the portion of the V-belt 50 wound on the driven pulley 40.

As a result, the rotation of the driving pulley 30 is increased and transmitted to the driven pulley 40, so that the secondary shaft 18 is rotated at a high speed. The speed ratio is adjustable by changing the rotational angle of the eccentric cam 84 relative to the reference position of the eccentric cam 84.

Figs. 4(b) and 6 show the state in which the eccentric cam 84 has rotated in one direction by 180 degrees from the state shown in Figs. 2 and 4(a) and as a result, the eccentric cam 84 is in contact with the roller 65 at a portion of its outer periphery that is the largest in eccentricity. Thus, in this state, the diameter of the portion of the V-belt 50 wound on the driving pulley 30 becomes maximum.

As the eccentric cam 84 is further rotated in the same direction from the state shown in Figs. 4(b) and 6, the portion of the outer periphery of the eccentric cam 84 that is in contact with the roller 65 gradually decreases in eccentricity.

At this time, since, as shown in Fig. 3, the pressing force of the elastic member 46 is being applied to the movable pulley member 42 of the driven pulley 40, the movable pulley member 42 is moved toward the fixed pulley member 41, so that the groove width of the driven pulley 40 decreases, and the diameter of the portion of the V-belt 50 wound on the driven pulley 40 increases. With an increase in diameter of the portion of the V-belt wound on the driven pulley 40, the tension of the V-belt 50 increases, so that the movable pulley member 32 of the driving pulley 30 slides away from the fixed pulley member 31 of the driving pulley 30, thus increasing the groove width of the driving pulley 30, and reducing the diameter of the portion of the V-belt 50 wound on the driving pulley 30.

As a result, the rotation of the driving pulley 30 is reduced and transmitted to the driven pulley 40, so that the secondary shaft 18 is rotated at a lower speed.

If the movable pulley member 32 of the driving pulley 30 encounters a large slide resistance when the movable pulley member 32 slides toward the fixed pulley member 31 of the driving pulley 30, such slide resistance will increase the load on the electric motor 72, thus making it necessary to increase the capacity of the electric motor 72.

In the embodiment, as shown in Fig. 6, since the movable pulley member 32 is slidably supported by the plurality of guide pins 37 of the sliding guide member 36, compared with the arrangement in which the movable pulley member 32 is slidably supported by means of splines, it is possible to significantly reduce the slide resistance of the movable pulley member 32, which in turn makes it possible to reduce the capacity and thus the size of the electric motor 72.

Also, in the embodiment, the arm member 60 is rotatably coupled to the movable pulley member 32 of the driving pulley 30 through the release bearing 63, and is provided with the bifurcated pieces 62 which rotatably support the roller 65. By rotating the eccentric cam 84 while being kept in contact with the roller 65, the movable pulley member 32 is moved together with the arm member 60 in the axial direction of the primary shaft 16, so that it is possible to adjust the groove width of the driving pulley 30. This eliminates the necessity to couple the arm driving device 70 with the arm member 60, so that the transmission can be easily assembled and disassembled.

In the embodiment, the speed ratio is changed by sliding the movable pulley member 32 of the driving pulley 30 relative to the fixed pulley member 31 of the driving pulley 30 by means of the arm driving device 70. However, the speed ratio may be changed by sliding the movable pulley member 42 of the driven pulley 40 relative to the fixed pulley member 41 of the driven pulley 40.

### DESCRIPTION OF THE NUMERALS

16. Primary shaft (driving shaft)
18. Secondary shaft (driven shaft)
30. Driving pulley
32. Movable pulley member
35. Sliding guide mechanism
36. Sliding guide member
37. Guide pin
38. Guide recess
40. Driven pulley
50. V-belt
60. Arm member
65. Roller
63. Pivot shaft
70. Arm driving device
71. Rotationally driving device
72. Electric motor
84. Eccentric cam

## Claims

1. A V-belt type infinitely variable transmission comprising:
a driving pulley supported by a driving shaft;
a driven pulley supported by a driven shaft;
a V-belt trained around the driving pulley and the driven pulley;
a sliding guide mechanism by means of which a movable pulley member of one of the driving pulley and the driven pulley is supported by the one of the driving shaft and the driven shaft supporting the movable pulley member so as to be rotationally fixed, and axially slidable, relative to the movable pulley member;
an arm member capable of moving in an axial direction of the movable pulley member, thereby moving the movable pulley member in the axial direction together with the arm member such that a groove width of said one of the driving pulley and the driven pulley changes; and
an arm driving device configured to move the arm member in the axial direction,
**characterized in that** the arm driving device comprises:
an eccentric cam kept in contact with the arm member and capable of moving the arm member in the axial direction when the eccentric cam is rotated; and
a rotationally driving device configured to rotate the eccentric cam.

2. The V-belt type infinitely variable transmission of claim 1, wherein the arm member is provided, at a portion of the arm member opposed to the eccentric cam, with a roller which is rotatable and kept in contact with the eccentric cam.

3. The V-belt type infinitely variable transmission of claim 1 or 2, wherein the sliding guide mechanism includes an annular sliding guide member fixedly fitted to said one of the driving shaft and the driven shaft, and a plurality of guide pins embedded in the sliding guide member and each slidably inserted in each of axial guide recesses formed in a boss portion of the movable pulley member and equal in number to the guide pins.
